# EUROPÄISCHE PATENTSCHRIFT

(11) **EP 1 060 010 B1**
(45) Veröffentlichungstag und Bekanntmachung des Hinweises auf die Patenterteilung: **30.10.2002**
(21) Anmeldenummer: 99911680.9
(22) Anmeldetag: 17.02.1999
(51) Int. Cl.: B01J 8/06

(54) **RÖHRENREAKTOR FÜR KATALYTISCHE REAKTIONEN**
TUBULAR REACTOR FOR CATALYTIC REACTIONS
REACTEUR TUBULAIRE POUR REACTIONS CATALYTIQUES

(30) Priorität: 18.02.1998 DE 19806810
(43) Veröffentlichungstag der Anmeldung: 20.12.2000
(73) Patentinhaber: DEGGENDORFER WERFT UND EISENBAU GMBH, D-94469 Deggendorf (DE)
(72) Erfinder: GÜTLHUBER, Friedrich, D-94526 Metten (DE)
(74) Vertreter: Bauer, Robert, Dipl.-Ing.
(86) Internationale Anmeldenummer: EP9901036
(87) Internationale Veröffentlichungsnummer: WO99042208

(56) Entgegenhaltungen:
- GB-A- 776 416
- US-A- 2 986 454
- US-A- 3 929 421
- US-A- 4 127 389

## Beschreibung

Die Erfindung betrifft einen Röhrenreaktor für katalytische Gasphasenreaktionen gemäß Gattungsbegriff des Patentanspruchs 1.

Derartige Reaktoren weisen regelmäßig ein innerhalb eines Reaktormantels von einem Wärmeträger umspültes Kontaktrohrbündel, das sich zwischen einem gaseintrittsseitigen und einem gasaustrittsseitigen Rohrboden erstreckt, sowie die beiden Rohrböden stirnseitig überspannende Gaseintritts- bzw. Gasaustrittshauben auf. Das zur Reaktion zu bringende Prozeßgas, im allgemeinen ein Gasgemisch, wird über die Gaseintrittshaube in die eine Katalysatormasse enthaltenden Kontaktrohre eingeleitet und nach Passieren derselben über die Gasaustrittshaube aus dem Reaktor abgeführt. Dabei kann sich der Gaseintritt oberseitig oder unterseitig befinden und der Wärmeträger gesamtheitlich gesehen im Gleich- oder Gegenstrom in bezug auf den Prozeßgasstrom durch den Reaktor hindurchtreten. Auch kann der Reaktor, wie etwa in DE 22 01 528 C, Fig. 5, gezeigt, mehrstufig ausgebildet sein.

Gewöhnlich wird der Prozeßgasstrom aus zwei oder mehreren erst kurz vor Eintritt in den Reaktor, d.h. dessen Gaseintrittshaube, zusammengeführten Stoffströmen erhalten. Dabei kann es, vor allem in unmittelbarer Nähe des gewöhnlich verhältnismäßig heißen Rohrbodens, zu für den Prozeß schädlichen Nebenreaktionen, ja sogar Zündungen und Deflagrationen kommen. Beispiele derartiger Reaktionsprozesse sind die Herstellung von Maleinsäureanhydrid, Phtalsäureanhydrid, Acrolein und Acrylsäure.

Im Versuch, solche Nebenreaktionen zu verhindern, hat man in die Gaseintrittshaube bereits Schüttungen aus keramischen Materialien oder ein Drahtmattengeflecht eingebracht. Ferner hat man versucht, da am gaseintrittsseitigen Rohrboden im Bereich der Rohrmündungen gewöhnlich die höchsten Temperaturen auftreten, diese Rohrmündungen durch eingesetzte Tüllen wärmezuisolieren. All diese Maßnahmen haben sich jedoch letztendlich nicht als wirkungsvoll oder zumindest als zuverlässig im Sinne einer Vermeidung der vorausgehend angesprochenen Nebenreaktionen erwiesen.

In US 2 986 454 A ist bereits vorgeschlagen worden, den reaktionsgaseintrittsseitigen Kontaktrohrenden sog. Isolationsrohre vorzuschalten, die von einer luftdurchströmten Kühlkammer umschlossen sind, um so das eintretende Reaktionsgasgemisch vor Eintritt der beabsichtigten Reaktion von heißen Teilen entfernt zu halten. Obgleich die vorgeschalteten Isolationsrohre an die darauffolgenden Kontaktrohre abgedichtet anschließen sollen, ist doch vorgesehen, die durch die Kühlkammer hindurchgeführte Luft anschließend dem Prozeßgas zuzusetzen. Es versteht sich, daß ein solches Vorgehen auf bestimmte Anwendungen beschränkt ist. Darüber hinaus bilden die - zwecks Ausgleichs unterschiedlicher Wärmedehnungen - mit einem Rollbund schwenkbar in die Kontaktrohre hineinragenden Isolationsrohre für die Katalysatoreinbringung und -entleerung unerwünschte Einschnürungen. Dies gilt in besonderem Maße, wenn der Reaktor eine große Vielzahl Kontaktrohre, beispielsweise über 10000; und einen großen Durchmesser, beispielsweise 7000 mm, aufweist, wo mit temperaturbedingten Versetzungen im Randbereich von ca. 10 mm zu rechnen ist.

Des weiteren ist es aus GB 776 416 A bekannt, bei einem Röhrenwärmetauscher zum Kühlen oder Aufheizen gesättigter Lösungen, der gleichfalls ein sich zwischen zwei Rohrböden erstreckendes, von einem Wärmeträger umspültes Rohrbündel aufweist, zur Vermeidung einer Auskristallisation an den Rohrböden wärmeträgerseitig eine gegossene und anschließend erhärtete Wärmeisolationsschicht vorzusehen. Derartige Materialien, die beim Gießen dünnflüssig genug sein müssen, um sich um die Rohre herum in gewünschter Weise zu verteilen, wie z.B. Kunstharz, weisen jedoch nur eine begrenzte Temperaturbeständigkeit auf, die sie etwa für die Verwendung geschmolzener Salze als Wärmeträger ungeeignet macht.

Schließlich ist es aus US-A-4 127 389 - wovon im Gattungsbegriff des Anspruchs 1 ausgegangen wird - bekannt, die Gasein- und Gasaustrittshauben samt den zugehörigen Rohrböden als eigene Kammern innerhalb des Reaktorgehäuses auszubilden, die im wesentlichen allseitig von strömungsberuhigtem Wärmeträger umgeben sind. Dazu ist in einem Abstand parallel zu jedem Rohrboden eine von den Kontaktrohren durchsetzte, nicht abgedichtete Platte angeordnet, deren gaseintrittsseitige eine Isolierschicht aus gegossenem Feuerfestmaterial trägt. Hier handelt es sich um einen verhältnismäßig schlanken, endothermen Hochtemperaturreaktor, dessen Wärmeträger eine Temperatur zwischen 1075 und 870°C aufweisen soll und somit mit Gewißheit gasförmig ist. Zudem noch soll die Druckdifferenz zwischen Prozeßgas und Wärmeträger maximal knapp 7 bar betragen. Dementsprechend können die Rohrböden samt ihrer Aufhängung verhältnismäßig leicht ausgebildet werden. Hätten sie neben dem Gewicht der Rohre das Gewicht eines flüssigen Wärmeträgers zu tragen, so wäre ihre übliche unmittelbare Verankerung am Reaktormantel unentbehrlich. Dies gilt um so mehr für eine Reaktorausführung vergleichsweise großen Durchmessers mit vielen Rohren.

Davon ausgehend liegt der Erfindung die Aufgabe zugrunde, einen Röhrenreaktor gemäß Gattungsbegriff, d.h. mit einer an den gaseintrittsseitigen Rohrboden wärmeträgerseitig angrenzenden Wärmeisolationszone, so zu gestalten, daß er mit praktisch jedem gängigen Durchmesser, jeder gängigen Rohrzahl, jeder gängigen Druckdifferenz und jedem denkbaren Wärmeträger einschließlich etwa eines Salzbades betrieben werden kann.

Diese Aufgabe ist erfindungsgemäß durch die Kennzeichnungsmerkmale des Anspruchs 1 gelöst. Die Unteransprüche geben darüber hinausgehend vorteilhafte Ausgestaltungsmöglichkeiten an.

Die betreffende Wärmeisolationszone am gaseintrittsseitigen Rohrboden in Gestalt einer Kammer oder von strömungsberuhigenden Einbauten gebildet bewirkt, daß der reaktionsgaseintrittsseitige Rohrboden und mit ihm auch der angrenzende Bereich der Gaseintrittshaube verhältnismäßig kühl gehalten wird, ohne daß es dazu irgendwelcher Einschränkungen in der Prozeßführung, der Reaktorausführung oder hinsichtlich des verwendeten Wärmeträgers bedarf. Dabei kann aber auch durch entsprechende Ausbildung der betreffenden Wärmeisolationszone trotz des an den Reaktormantel anschließenden, verhältnismäßig kalten Rohrbodens der Temperaturgradient an diesem Anschluß gering gehalten werden, wie dies zur Geringhaltung von Temperaturspannungen wünschenswert ist.

Nachfolgend werden einige bevorzugte Ausführungsbeispiele des betreffenden Röhrenreaktors anhand der Zeichnungen genauer beschrieben. Dabei zeigt
- Fig. 1: einen schematischen Längsschnitt durch einen erfindungsgemäßen Röhrenreaktor in einer ersten Ausführungsform samt anschließenden Elementen,
- Fig. 2: einen schematischen Längsschnitt durch den gaseintrittsseitigen Endabschnitt eines ebensolchen Röhrenreaktors, jedoch mit einer Variante,
- Fig. 3: einen schematischen Längsschnitt durch den gaseintrittsseitigen Endabschnitt eines Röhrenreaktors wie aus Fig. 1 mit einer anderen Variante,
- Fig. 4: einen schematischen Längsschnitt durch den gaseintrittsseitigen Endabschnitt eines erfindungsgemäßen Röhrenreaktors in einer konkreten Ausführungsform und
- Fig. 5: einen schematischen Längsschnitt durch den gaseintrittsseitigen Endabschnitt eines erfindungsgemäßen Röhrenreaktors in einer anderen konkretenen Ausführungsform.

Soweit in den einzelnen Figuren ohne weiteres vergleichbare Elemente auftreten, sind diese mit den gleichen Bezugszahlen bezeichnet.

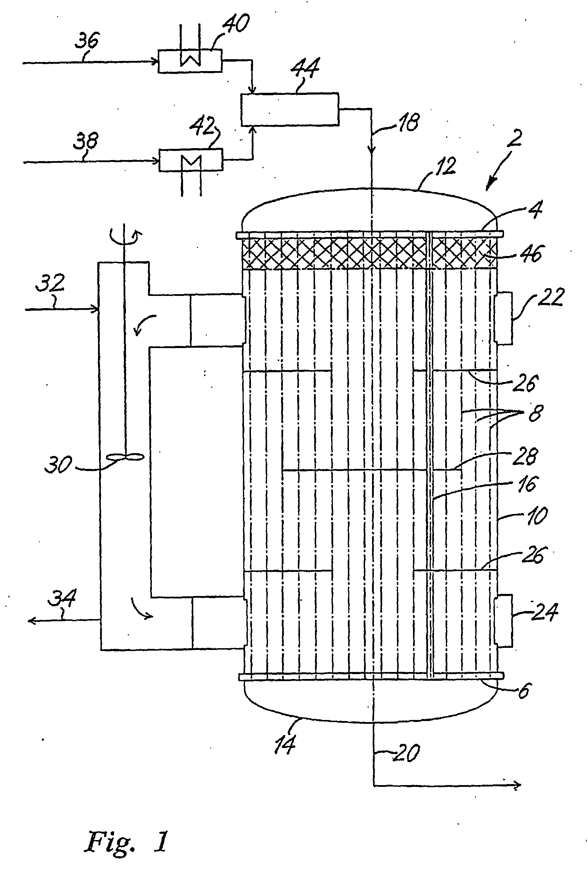

Der in Fig. 1 dargestellte Röhrenreaktor 2 weist in insoweit üblicher Weise ein vertikales, sich von einem gaseintrittsseitigen Rohrboden 4 zu einem gasaustrittsseitigen Rohrboden 6 erstrekkendes Rohrbündel 8 innerhalb eines zylindrischen Reaktormantels 10 auf, an dem die beiden Rohrböden 4 und 6 abgedichtet angebracht sind. Der gaseintrittsseitige Rohrboden 4 ist von einer Gaseintrittshaube 12 und der gasaustrittsseitige Rohrboden 6 von einer Gasaustrittshaube 14 überspannt, die wiederum an dem jeweiligen Rohrboden abgedichtet angebracht ist. Die einzelnen Rohre, wie z.B. 16, des Rohrbündels 8 enthalten eine gasdurchlässige Katalysatormasse. Das damit zur Reaktion zu bringende Reaktions- oder Prozeßgas gelangt über eine Gaszuführungsleitung 18 in die Gaseintrittshaube 12, während das durch das Rohrbündel 8 hindurchgetretene, zur Reaktion gekommene Prozeßgas aus der Gasaustrittshaube 14 über eine Gasabführungsleitung 20 abgezogen wird. Den Reaktormantel 10 umgebende Ringkanäle 22 und 24 in der Nähe der beiden Rohrböden 4 und 6 ermöglichen die Zuführung bzw. Abführung eines zumindest im Betrieb des Reaktors flüssigen Wärmeträgers in den bzw. aus dem Reaktormantel 10, wo er die einzelnen Rohre, wie z.B. 16, des Rohrbündels 8 von außen umspült, um Reaktionswärme abzuführen. Dabei kann die Strömung des Wärmeträgers, wie gezeigt, durch zweierlei Leitbleche, 26 bzw. 28, in gewünschter Weise geführt und ggf. auch über den Reaktormantelquerschnitt verteilt werden. Der über den Ringkanal 22 aus dem Reaktormantel 10 abgezogene Wärmeträger wird durch eine Pumpe 30 dem Reaktormantel 10 über den Ringkanal 24 wieder zugeführt, wobei ein steuerbarer Teilstrom vermittels Zweigleitungen 32 und 34 über einen (nicht dargestellten) Kühler geführt wird.

Das über die Gaszuführungsleitung 18 dem Reaktor zugeführte Prozeßgas setzt sich (in diesem Beispiel) aus zwei Stoffströmen 36 und 38 zusammen, die, über Wärmetauscher 40 bzw. 42 vorgewärmt, in einem Mischer 44 gemischt werden, um als das vorerwähnte Prozeßgas durch die Gaszuführungsleitung 18 der Gaseintrittshaube 12 zugeführt zu werden.

In manchen Fällen ist das zugeführte Prozeßgas als solches bereits sehr reaktionsträchtig, insbesondere wenn es mit heißen Flächen in Berührung kommt, und innerhalb des unter der Gaseintrittshaube 12 befindlichen Raumes bildet normalerweise der Rohrboden die heißeste Fläche. Aus diesem Grunde sieht die Erfindung vor, den Rohrboden 4 gegenüber dem das Rohrbündel 8 umspülenden Wärmeträger durch eine wärmeträgerseitige Wärmeisolationszone 46 wärmezuisolieren und damit samt der angrenzenden Partie der Gaseintrittshaube 12 verhältnismäßig kühl zu halten.

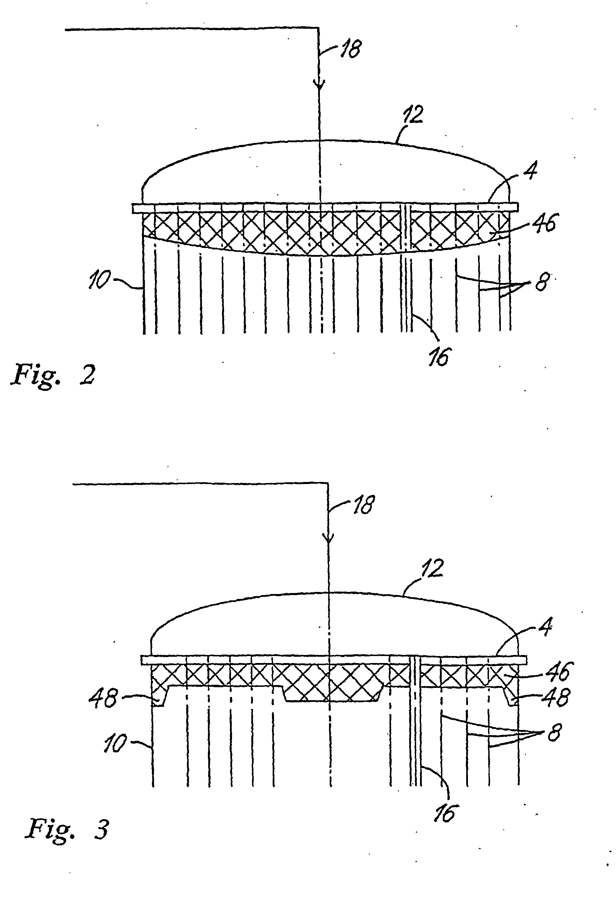

In den Figuren 1, 2 und 3 ist die betreffende Wärmeisolationszone 46 lediglich schematisch gezeichnet. Während sie nach Fig. 1 eine gleichmäßige Dicke besitzt, nimmt ihre Dicke nach Fig. 2 zur Mitte hin zu unter der Annahme, daß der Rohrboden dort normalerweise die höchste Temperatur aufweist.

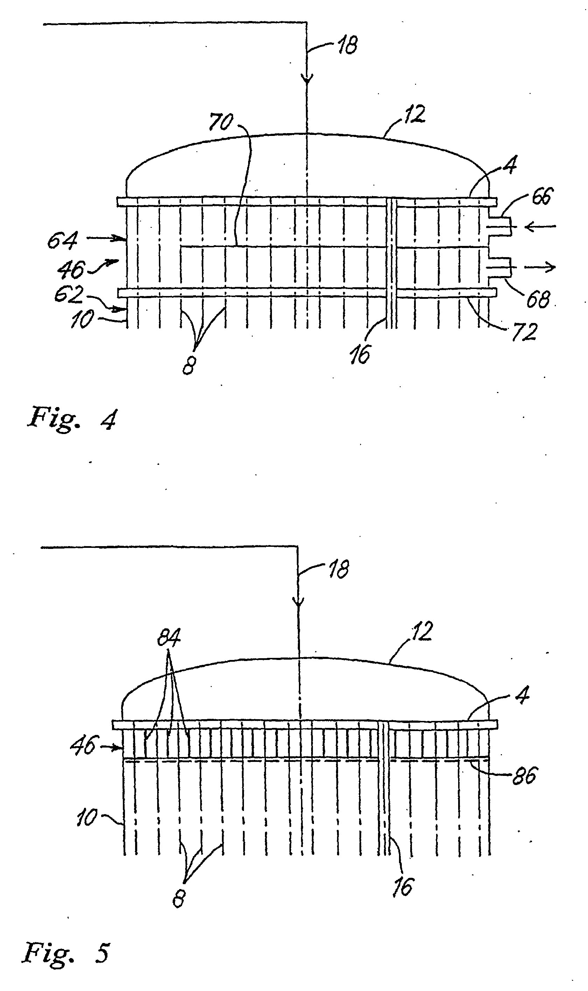

Es versteht sich, daß bei anderer Temperaturverteilung das Profil der Wärmeisolationszone 46 auch eine andere Form annehmen kann. So etwa kann die Wärmeisolationszone 46, wie in Fig. 3 gezeigt, am Rand des Rohrbodens 4 entlang der Innenwand des Reaktormantels 10 einen Kragen 48 aufweisen, um den Temperaturgradienten am Anschluß des Reaktormantels an den kühleren Rohrboden und damit Temperaturspannungen gering zu halten. Auch kann, wie gleichfalls aus Fig. 3 ersichtlich, die Dicke der Wärmeisolationszone 46 im Bereich rohrfreier Zonen des Reaktors eine andere, in der Regel eine größere als im Rohrbereich sein, um so der dort normalerweise stärkeren Erwärmung des Rohrbodens Rechnung zu tragen. Sodann ist es denkbar, anstatt die Dicke oder nur die Dicke der Wärmeisolationszone deren Aufbau zu variieren. Auch kann sich die Wärmeisolationszone 46 auf Teilbereiche des Rohrbodens 4, so etwa rohrfreie Zonen oder den Randbereich des Rohrbodens am Übergang zum Reaktormantel 10, beschränken.

Fig. 4 zeigt eine praktische Ausführungsform der Wärmeisolationszone 46 wie sie in Fig. 1 nur schematisch gezeigt ist. Hiernach besteht die Wärmeisolationszone 46 aus einer gegenüber der Reaktionszone 62 des Reaktors abgeschlossenen Kammer 64. Die Kammer 64 besitzt übereinanderliegende Ein- und Auslässe 66 bzw. 68 für ein Kühlmittel sowie ein dazwischenliegendes Leitblech 70, welches das Kühlmittel zwingt, an dem Rohrboden 4 wie auch einer Trennscheibe 72 entlangzustömen, welche die Kammer 64 von der Reaktionszone 62 trennt. Durch die Trennscheibe 72 sind die Rohre, wie z.B. 16, eingedichtet hindurchgeführt.

Das betreffende Kühlmittel kann aus dem gleichen oder einem anderen Medium bestehen wie der Wärmeträger in der Reaktionszone 62. Im ersteren Fall kann es an geeigneter Stelle nach dessen Rückkühlung von dem Wärmeträgerkreislauf nach Fig. 1 abgezweigt werden. Auch spielen in diesem Fall etwaige kleinere Undichtigkeiten an der Rohrdurchführung durch die Trennscheibe 72 keine entscheidende Rolle. Dennoch sollte in der Kammer 64 in bezug auf die Reaktionszone 62 etwa der gleiche Druck aufrechterhalten werden, um Leckströmungen an der Rohrdurchführung gering zu halten.

Indessen kann die Kammer 64 auch evakuiert oder mit einem unbeweglichen festen, flüssigen oder gasförmigen Wärmeisolationsmittel, wie z.B. Sand, Öl oder Luft, gefüllt sein. Dabei kann ein flüssiges oder gasförmiges Wärmeisolationsmittel durch eine eingebaute Zellenstruktur an einer Zirkulation gehindert sein. Auf jeden Fall sollte das in der Kammer 64 verwendete Kühl- oder Wärmeisolationsmittel ein solches sein, welches mit dem in der Reaktionszone 62 auftretenden Wärmeträger nicht zu reagieren vermag.

Nach Fig. 5 besteht die Wärmeisolationszone 46 lediglich aus einer durch Einbauten 84 in Form einer Waben- oder konzentrischen Ringstruktur strömungsberuhigten Zone des Wärmeträgers, der damit dort infolge des vom eintretenden Prozeßgas gekühlten Rohrbodens 4, gleichgültig ob der Reaktor im Gleichstrom oder Gegenstrom arbeitet, in der Regel eine geringere Temperatur annehmen wird als in der eigentlichen Reaktionszone. Dies gilt um so mehr, wenn die Kontaktrohre nicht bis zum Rohrboden hin mit Katalysator gefüllt werden.

Die Einbauten 84 können, müssen jedoch nicht, wie in Fig. 5 gestrichelt angedeutet, durch eine Platte 86 abgedeckt sein, und ebenso können sie zum Rohrboden 82 hin abgedichtet sein.

Die Erfindung ist prinzipiell gleichermaßen anwendbar für exotherm wie endotherm arbeitende Reaktoren, auch Mehrstufenreaktoren wie etwa in DE 22 01 528 C, Fig. 5, gezeigt, und zwar unabhängig davon, ob sich der Gaseintritt oberseitig oder unterseitig befindet und der Wärmeträger im Gleich- oder Gegenstrom durch den Reaktor hindurchtritt.

Generell gilt, daß die am gaseintrittsseitigen Rohrboden auftretenden Rohrenden, falls wünschenswert, ganz oder teilweise von Katalysatormasse freigehalten oder mit einem inerten Material oder einer Mischung eines solchen mit Katalysatormaterial gefüllt sein können, um die Reaktionstemperatur in der Nähe des Rohrbodens zu begrenzen.

## Patentansprüche

1. Röhrenreaktor (2) für katalytische Gasphasenreaktionen,
mit einem innerhalb eines Reaktormantels (10) von einem Wärmeträger umspülten Kontaktrohrbündel (8), das sich, dort beginnend bzw. endend und daran abgedichtet, zwischen einem gaseintrittsseitigen Rohrboden (4) und einem gasaustrittsseitigen Rohrboden (6) erstreckt,
mit die beiden Rohrböden stirnseitig überspannenden Gaseintritts- bzw. Gasaustrittshauben (12, 14)
und mit einer an den gaseintrittsseitigen Rohrboden wärmeträgerseitig angrenzenden Wärmeisolationszone (46),
**dadurch *gekennzeichnet,***
**daß** die beiden Rohrböden (4, 6) in an sich bekannter Weise an ihrem Rand abgedichtet am Reaktormantel (10) verankert sind und daß die Wärmeisolationszone (46) von einer ein festes, flüssiges oder gasförmiges Wärmeisolationsmaterial enthaltenden Kammer (64) oder von in bezug auf den Wärmeträger strömungsberuhigenden Einbauten (84) gebildet wird.

2. Röhrenreaktor (2) nach Anspruch 1, **dadurch *gekennzeichnet*, daß** die Wärmeisolationszone (46) eine örtlich variierende Dicke aufweist.

3. Röhrenreaktor (2) nach Anspruch 1 oder 2, **dadurch *gekennzeichnet,* daß** die Wärmeisolationszone (46) einen örtlich variierenden Aufbau aufweist.

4. Röhrenreaktor (2) nach einem der vorhergehenden Ansprüche, **dadurch *gekennzeichnet,* daß** sich die Wärmeisolationszone (46) auf Teilbereiche, wie z.B. rohrfreie Stellen oder den Randbereich des gaseintrittsseitigen Rohrbodens (4), beschränkt.

5. Röhrenreaktor (2) nach einem der vorhergehenden Ansprüche mit einer Wärmeisolationszone (46) in Gestalt einer Kammer (64), **dadurch *gekennzeichnet,* daß** ein flüssiges oder gasförmiges Wärmeisolationsmaterial in der Kammer durch in die Kammer eingebaute Strukturen an einer Zirkulation gehindert ist.

6. Röhrenreaktor (2) nach einem der Ansprüche 1 bis 4 mit einer Wärmeisolationszone (46) in Gestalt einer Kammer (64), **dadurch *gekennzeichnet,* daß** ein flüssiges oder gasförmiges Wärmeisolationsmaterial als Kühlmittel durch die Kammer hindurch umgewälzt wird.

7. Röhrenreaktor (2) nach Anspruch 6, **dadurch *gekennzeichnet,* daß** als flüssiges oder gasförmiges Wärmeisolationsmaterial ein Teilstrom des das Kontaktrohrbündel (8) umspülenden Wärmeträgers Verwendung findet.

8. Röhrenreaktor (2) nach einem der Ansprüche 1 bis 4 mit einer von Einbauten (84) gebildeten Wärmeisolationszone (46), **dadurch *gekennzeichnet*, daß** die Einbauten eine Waben- oder konzentrische Ringstruktur aufweisen.

9. Röhrenreaktor (2) nach Anspruch 8, **dadurch *gekennzeichnet*, daß** die Einbauten (84) zumindest auf ihrer dem gaseintrittsseitigen Rohrboden (4) abgekehrten Seite abgedeckt, vorzugsweise abgedichtet, sind.

## Claims

1. Tube reactor (2) for catalytic gas-phase reactions,
having a contact-tube bundle (8), around which a heat-transfer medium flushes within a reactor casing (10) and which extends between a gas-inlet-side tube plate (4) and a gas-outlet-side tube plate (6), beginning and ending there and being sealed thereto,
having gas inlet and gas outlet hoods (12, 14) which span the two tube plates at the end sides,
and having a thermal insulation zone (46) which adjoins the gas-inlet-side tube plate on the heat-transfer medium side,
**characterized in that** the two tube plates (4, 6) are anchored, at their edge, on the reactor casing (10) in a sealed manner, as known per se, and **in that** the thermal insulation zone (46) is formed by a chamber (64), which contains a solid, liquid or gaseous thermal insulation material, or by internal installations (84) suitable to calm the flow of the heat-transfer medium.

2. Tube reactor (2) according to claim 1, **characterized in that** the thermal insulation zone (46) has a locally varying thickness.

3. Tube reactor (2) according to claim 1 or 2, **characterized in that** the thermal insulation zone (46) has a locally varying structure.

4. Tube reactor (2) according to any one of the preceding claims, **characterized in that** the thermal insulation zone (46) is restricted to partial regions, such as for example tube-free locations or the edge region of the gas-inlet-side tube plate (4).

5. Tube reactor (2) according to any one of the preceding claims, having a thermal insulation zone (46) in the form of a chamber (64), **characterized in that** a liquid or gaseous thermal insulation material in the chamber is prevented from circulating by structures fitted into the chamber.

6. Tube reactor (2) according to any one of the claims 1 to 4, having a thermal insulation zone (46) in the form of a chamber (64), **characterized in that** a liquid or gaseous thermal insulation material is circulated through the chamber as a coolant.

7. Tube reactor (2) according to claim 6, **characterized in that** a partial stream of the heat-transfer medium flushing around the contact tube bundle (8) is used as the liquid or gaseous thermal insulation material.

8. Tube reactor (2) according to any one of the claims 1 to 4, having a thermal insulation zone (46) formed by internal installations (84), **characterized in that** the internal installations have a honeycomb or concentric ring structure.

9. Tube reactor (2) according to claim 8, **characterized in that** the internal installations (84) are covered, preferably in a sealed manner, at least on their side remote from the gas-inlet-side tube plate (4).

## Revendications

1. Réacteur tubulaire (2) pour réactions catalytiques en phase gazeuse, comprenant un faisceau de tubes de contact (8) qui est léché par un fluide caloporteur à l'intérieur d'une robe de réacteur (10), et qui s'étend entre un fond tubulaire (4) côté entrée des gaz et un fond tubulaire (6) côté sortie des gaz, en commençant et en se terminant respectivement au niveau de ces fonds et en y étant monté à joint étanche,
des capots d'entrée et de sortie des gaz (12, 14) qui couvrent les deux fonds tubulaires sur le côté frontal,
et une zone d'isolation thermique (46) qui est adjacente au fond tubulaire du côté entrée des gaz, sur le côté du fluide caloporteur,
**caractérisé**
**en ce que** les deux fonds tubulaires (4, 6) sont ancrés d'une façon connue en soi à la robe (10) du réacteur, à joint étanche le long de leur bord et en ce que la zone d'isolation thermique (46) est formée d'une chambre (64) contenant une matière isolante thermique solide, liquide ou gazeuse, ou encore est formée d'éléments rapportés intérieurs (84) qui calment l'écoulement en ce qui concerne le fluide caloporteur.

2. Réacteur tubulaire (2) selon la revendication 1, **caractérisé en ce que** la zone d'isolation thermique (46) présente une épaisseur qui varie selon l'endroit.

3. Réacteur tubulaire (2) selon la revendication 1 ou 2, **caractérisé en ce que** la zone d'isolation thermique (46) présente une construction qui varie selon l'endroit.

4. Réacteur tubulaire (2) selon une des revendications précédentes, **caractérisé en ce que** la zone d'isolation thermique (46) se limite à des régions partielles comme, par exemple, des emplacements exempts de tubes ou la région marginale du fond tubulaire (4) côté entrée des gaz.

5. Réacteur tubulaire (2) selon une des revendications précédentes, comprenant une zone d'isolation thermique (46) ayant la forme d'une chambre (64), **caractérisé en ce qu'**une matière isolante thermique liquide ou gazeuse contenue dans la chambre est empêchée de circuler par les structures rapportées dans la chambre.

6. Réacteur tubulaire (2) selon une des revendications 1 à 4, comprenant une zone d'isolation thermique (46) ayant la forme d'une chambre (64), **caractérisé en ce qu'**une matière isolante thermique liquide ou gazeuse est mise en circulation à travers la chambre pour servir de moyen de refroidissement.

7. Réacteur tubulaire (2) selon la revendication 6, **caractérisé en ce qu'**on utilise, comme matière d'isolation thermique liquide ou gazeuse, un flux partiel du fluide caloporteur qui lèche le faisceau de tubes de contact (8).

8. Réacteur tubulaire (2) selon une des revendications 1 à 4, comprenant une zone d'isolation thermique (46) formée d'éléments rapportés intérieurs (84), **caractérisé en ce que** les éléments rapportés intérieurs présentent une structure en nid d'abeilles ou en anneaux concentriques.

9. Réacteur tubulaire (2) selon la revendication 8, **caractérisé en ce que** les éléments intérieurs rapportés (84) sont recouverts, de préférence montés à joint étanche, du moins sur leur côté qui est éloigné du fond tubulaire (4) côté entrée des gaz.
